# EUROPÄISCHE PATENTSCHRIFT

(11) **EP 2 182 605 B1**
(45) Veröffentlichungstag und Bekanntmachung des Hinweises auf die Patenterteilung: **20.04.2016**
(21) Anmeldenummer: 09013157.4
(22) Anmeldetag: 19.10.2009
(51) Int. Cl.: H02H 7/12, H02M 1/32

(54) **Schaltungsanordnung zum Schutz von elektronischen Einrichtungen gegen fehlerhafte Logikspannungen**
Switch assembly for protecting electronic devices against faulty logic voltages
Agencement de commutation pour la protection de dispositifs électroniques contre des tensions logiques erronées

(30) Priorität: 29.10.2008 DE 102008053702
(43) Veröffentlichungstag der Anmeldung: 05.05.2010
(73) Patentinhaber: Phoenix Contact GmbH & Co. KG, 32825 Blomberg (DE)
(72) Erfinder: Säck, Klaus-Peter, 32760 Detmold (DE); Warneke, Thomas, 37671 Höxter (DE); Oster, Viktor, 32825 Blomberg (DE)
(74) Vertreter: Kampfenkel, Klaus

(56) Entgegenhaltungen:
- EP-A2- 1 094 586
- DE-A1- 3 732 334
- US-A1- 2008 012 542

## Beschreibung

Die Erfindung betrifft ein Sicherheitssystem zum mehrkanaligen Überwachen einer sicherheitsrelevanten Einrichtung, die für jeden Kanal jeweils eine Logikeinrichtung enthält, welche gegen fehlerhafte Logikspannungen geschützt werden sollen.

Aus der US 2008/012542 A1 ist ein Gleichstromspannungswandler mit einer Steuerschaltung zur Erzeugung eines pulsweiten modulierten Signals bekannt, bei dem am Energieversorgungsanschluss ein Eingangsleistungsschalter angeordnet ist, der beim Auftreten einer Überspannung geöffnet wird. Hierzu wird die abgegebene Gleichspannung des Spannungswandlers von einer Überspannung-Überwachungsschaltung überwacht und im Ereingisfall eine Überspannungsschutzschaltung angesteuert, welche den Eingangsleistungsschalter öffnet. Die bekannte Schaltungsanordnung bietet einen einfachen Überlastschutz, ist aber nicht in der Lage, einen erhöhten Schutz gegen Überspannungen etwa in mehrkanaligen Sicherheitssystemen zu bieten.

Die DE 37 32 334 A1 beschreibt eine als Schaltnetzteil konfigurierte Stromversorgungseinrichtung, die im Zusammenwirken von Suppressordioden mit Stromwandlern die Zerstörung von Bauelementen innerhalb des Steuersystems und des Schaltnetzteils in einem Störfall - bei Kurzschluss, Überstrom und/oder Überspannung - durch Ausschalten des Schaltnetzteils verhindert.

Die EP 1 094 586 A2 betrifft die Stromzufuhr zu einer Last und die Stromabschaltung, wenn ein Kurzschluss oder ein Überstrom bei der Last festgestellt wird. Die Schaltung umfasst eine stabile Potentialeinstellung bei der Stromzufuhr zur Last und eine Regelung der Ausgangsspannung mit hoher Präzision.

Der Erfindung liegt die Aufgabe zugrunde, eine Schaltungsanordnung zum Schutz von elektronischen Einrichtungen gegen fehlerhafte Logikspannungen zu schaffen, welche einen erhöhten Schutz gegen Überspannungen liefert, so dass diese Schaltungsanordnung auch in mehrkanaligen Sicherheitssystemen, welche beispielsweise den Performance Level "e" nach DIN EN ISO 13849 erfüllen, eingesetzt werden kann.

Das technische Problem löst die Erfindung mit den Merkmalen des Anspruchs 1.

Danach ist eine Schaltungsanordnung zum Schutz von elektronischen Einrichtungen gegen fehlerhafte Logikspannungen vorgesehen. Die Schaltungsanordnung weist einen Eingangsanschluss zum Anschließen einer Energieversorgungseinrichtung auf, welche eine Gleichspannung oder eine Wechselspannung liefern kann.

Weiterhin ist wenigstens ein Spannungswandler vorgesehen, der ausgangsseitig eine, vorzugsweise einstellbare, Logikspannung liefert. Zwischen dem wenigstens einen Spannungswandler und dem Eingangsanschluss ist ein steuerbares Schaltelement, beispielsweise ein Schalttransistor, geschaltet. Eine erste Überwachungseinrichtung dient dazu, die Logikspannung zu überwachen. Die erste Überwachungseinrichtung ist derart ausgebildet, dass sie das Öffnen des Schaltelements veranlasst, wenn die Logikspannung einen vorbestimmten Schwellwert erreicht oder überschreitet.

Angemerkt sei, dass unter Logikspannung die Ausgangsspannung des Spannungswandlers verstanden wird. Die Logikspannung bildet somit die Versorgungsspannung für die elektronischen Einrichtungen.

Die Schaltungsanordnung ermöglicht, dass die Spannung unmittelbar dort überwacht wird, wo sie eine gefährliche Auswirkung haben kann, nämlich am Ausgang des Spannungswandlers. Auf diese Weise wird auch gleichzeitig die Funktionsfähigkeit des Spannungswandlers mit überwacht.

Sofern die Energieversorgungseinrichtung eine Gleichspannung liefert, kann es sich bei dem Spannungswandler um einen DC-DC-Wandler, das heißt einen Gleichspannungswandler, handeln. Angemerkt sei an dieser Stelle, dass DC-DC-Wandler in der Regel integrierte Spannungsüberwachungseinrichtungen aufweisen, welche die Ausgangsspannung überwachen. Mit der vorgeschlagenen Schaltungsanordnung wird somit die Ausgangsspannung am Spannungswandler redundant überwacht, so dass die Schaltungsanordnung auch im Bereich der Sicherheitstechnik eingesetzt werden kann.
Gemäß einer vorteilhaften Weiterbildung können auch mehrere Spannungswandler parallel geschaltet und über das Schaltelement mit dem Eingangsanschluss verbunden werden. Die Spannungswandler können verschiedene Logikspannungen an den Wandlerausgängen bereitstellen.

In einer sicherheitstechnischen Umgebung ist es notwendig, dass bei Auftritt eines Fehlers die zu sichernden Einrichtungen in einem gesicherten Zustand gehalten werden können.

Hierzu weist die Schaltungsanordnung eine Einrichtung zum sicheren Halten des Schaltelements im geöffneten Zustand auf. Bei der Halteeinrichtung kann es sich beispielsweise um ein Flip-Flop handeln.

Um die Leistungsfähigkeit der Schaltungsanordnung zu verbessern und eine höhere Sicherheit zu garantieren, kann eine zweite Überwachungseinrichtung vorgesehen sein, die beispielsweise die Spannung am Eingangsanschluss, die Funktionsfähigkeit der ersten Überwachungseinrichtung und/oder die Funktionsfähigkeit des Schaltelements überwacht. Stellt die zweite Überwachungseinrichtung einen Fehler fest, so veranlasst sie ebenfalls, dass das Schaltelement geöffnet wird. Die zweite Überwachungseinrichtung kann ferner einem Notausschalter zugeordnet sein, welcher manuell betätigt werden kann.

Ein besonderes Anwendungsgebiet für die vorgeschlagene Schaltungsanordnung ist die Sicherheitstechnik.

Demzufolge wird weiterhin ein Sicherheitssystem zum mehrkanaligen Überwachen einer sicherheitsrelevanten Einrichtung, beispielsweise einer Schutztür, vorgeschlagen. Das Sicherheitssystem weist mehrere Kanäle auf, denen jeweils eine Logikeinrichtung zugeordnet ist. Ferner enthält das Sicherheitssystem die zuvor beschriebene Schaltungsanordnung, wobei der Ausgang des wenigstens einen Spannungswandlers mit wenigstens einer Logikeinrichtung verbunden ist. Demnach kann die vom Spannungswandler bereitgestellte Logikspannung an die Logikeinrichtung jedes Kanals angelegt werden. Alternativ können mehrere Spannungswandler parallel geschaltet werden, die jeweils eine separate Logikeinrichtung speisen.

Die Schaltungsanordnung kann kostengünstig und mit geringem Platzbedarf aufgebaut werden, da sie eine Energieversorgung beider Kanäle mittels einer einzigen Energieversorgungseinrichtung ermöglicht und beide Kanäle gegen Überspannungen schützt. Dank der vorgeschlagenen Schaltungsanordnung ist es somit nicht erforderlich, die Kanäle des Sicherheitssystems zu entkoppeln.

Angemerkt sei an dieser Stelle, dass die Logikeinrichtungen auch gegen Unterspannungen geschützt werden können. Hierzu können standardisierte Reset-Bausteine verwendet werden, die in herkömmlichen Spannungswandlern vorhanden sind und somit keine zusätzlichen Kosten verursachen. Optional oder ergänzend kann hierzu auch die erste und/oder zweite Überwachungseinrichtung entsprechend ausgebildet werden.

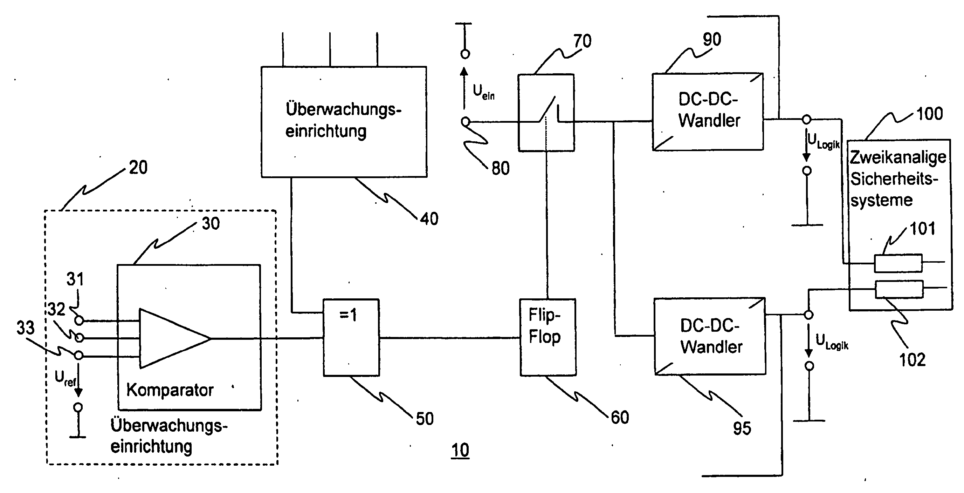

Die Erfindung wird nachfolgend anhand eines Ausführungsbeispiels in Verbindung mit einer einzigen Figur näher erläutert.

Die Figur zeigt eine beispielhafte Schaltungsanordnung 10, mit der ein an sich bekanntes mehrkanaliges Sicherheitssystem 100 gegen Überspannungen geschützt werden kann. Im vorliegenden Beispiel weist das Sicherheitssystem 100 zwei entkoppelte Kanäle. Die Schaltungsanordnung 10 weist eine erste Überwachungseinrichtung 20 auf, die beispielsweise einen Komparator 30 enthält. Der Komparator 30 hat die Aufgabe, Logikspannungen zu überwachen, welche an den Eingangsanschlüssen 31 und 32 angelegt werden können. Hierzu werden die Logikspannungen mit einer Referenzspannung verglichen, welche am Eingang 33 des Komparators 30 anliegt. Optional kann eine weitere Überwachungseinrichtung 40 vorgesehen sein. Die Ausgänge der beiden Überwachungseinrichtungen 20 und 40 sind beispielsweise mit einem ODER-Gatter 50 verbunden. Der Ausgang des ODER-Gatters 50 ist beispielsweise mit einem Flip-Flop 60 verbunden, welches wiederum ein steuerbares Schaltelement 70 ansteuert. Das steuerbare Schaltelement kann zum Beispiel ein Feldeffekttransistor sein. Die Schaltungsanordnung 10 weist einen Eingangsanschluss 80 auf, in den über eine nicht dargestellte Versorgungseinrichtung beispielsweise eine Gleichspannung Uₑᵢₙ angelegt werden kann. Der Eingangsanschluss 80 wird über das Schaltelement 70 beispielsweise mit dem Eingang eines DC-DC-Wandlers 90 und dem Eingang eines DC-DC-Wandlers 95 verbunden. Beide DC-DC-Wandler 90 und 95 liefern ausgangsseitig jeweils die zu überwachende Logikspannung U_{logik}. Im vorliegenden Beispiel speist die vom DC-DC-Wandler 90 gelieferte Logikspannung die Logikeinrichtung 101, während die vom DC-DC-Wandler 95 gelieferte Logikspannung die Logikeinrichtung 102 des zweikanaligen Sicherheitssystems 100 speist. Die von den DC-DC-Wandlern 90 und 95 bereitgestellten Logikspannungen werden beispielsweise jeweils über einen Spannungsteiler (nicht dargestellt) dem Eingang 31 beziehungsweise 32 des Komparators 30 zugeführt.

Aufgabe der Überwachungseinrichtung 20 ist es, beide Logikeinrichtungen 101 und 102 des zweikanaligen Sicherheitssystems 100 von der am Einganganschluss 80 anliegenden Eingangsspannung Uₑᵢₙ zu trennen, sobald wenigstens eine der überwachten Logikspannungen einen vorbestimmten Schwellwert erreicht oder überschreitet. Dadurch wird erreicht, dass, obwohl beide Kanäle des Sicherheitssystems 100 von einer gemeinsamen Energieversorgungseinrichtung gespeist werden, bei Erkennen einer fehlerhaften Logikspannung unverzüglich beide Logikeinrichtungen 101 und 102 von der Energieversorgungseinrichtung getrennt werden.

Die zweite Überwachungseinrichtung 40 kann beispielsweise dazu verwendet werden, den Eingangsanschluss 80 und somit die Eingangsspannung, die Funktionsweise des Schaltelements 70, die Funktionsweise der Überwachungseinrichtung 20, die Funktionsweise.des ODER-Gatters 50, die Funktionsweise der DC-DC-Wandler 90 und 95 und/oder die Funktionsweise des Flip-Flops 60 zu überwachen. Ferner kann ein Notaus-Signal unmittelbar dem ODER-Gatter 50 zugeführt werden oder ein entsprechender Notaus-Schalter kann mit der Überwachungseinrichtung 40 verbunden sein.

Nachfolgenden wird die Funktionsweise der in der Figur dargestellten Schaltungsanordnung 10 näher erläutert.

Solange keine der von den DC-DC-Wandlern 90 und 95 bereitgestellten Logikspannungen einen vorgegebenen Schwellwert überschreitet und auch die Überwachungseinrichtung 40 keinen Fehler erkannt hat, ist das Ausgangssignal beider Überwachungseinrichtungen logisch Null. Demzufolge ist das Ausgangssignal des ODER-Gatters 50 ebenfalls logisch Null. Unter Ansprechen auf das Ausgangssignal des ODER-Gatters 50 sorgt das Flip-Flop 60 dafür, dass das Schaltelement 70 geschlossen, d. h. in einem leitenden Zustand ist. Die Eingangsspannung Uₑᵢₙ am Eingangsanschluss 80 liegt dann an dem jeweiligen Eingang der beiden DC-DC-Wandler 90 und 95 an. In diesem Fall werden die beiden Logikeinheiten 101 und 102 des zweikanaligen Sicherheitssystems 100 jeweils mit einer fehlerfreien Logikspannung gespeist.

Stellt der Komparator 30 der Überwachungseinrichtung 20 jedoch fest, dass einer oder beide DC-DC-Wandler eine zu hohe Logikspannung liefern, setzt der Komparator 30 den Eingang des ODER-Gatters 50 auf 1, so dass am Ausgang des ODER-Gatters 50 eine logische Eins anliegt. Unter Ansprechen auf die logische Eins wird das Flip-Flop 60 derart angesteuert, dass es das Schaltelement 70 öffnet, d. h. in einen sperrenden Zustand steuert. Dadurch werden beide DC-DC-Wandler 90 und 95 von der Eingangsspannung am Eingangsanschluss 80 getrennt und somit beide Logikeinheiten 101 und 102 des zweikanaligen Sicherheitssystems 100 abgeschaltet, woraufhin ein zu überwachendes sicherheitsrelevantes Gerät (nicht dargestellt) in einen sicheren Zustand gefahren werden kann.

Bei einem anderen beispielhaften Szenario stellt die Überwachungseinrichtung 20 fest, dass beide DC-DC-Wandler 90 und 95 ordnungsgemäß arbeiten und eine vorbestimmte Logikspannung bereitstellen. Allerdings hat die Überwachungseinrichtung 40 einen Fehlerfall detektiert.

Ein Fehlerfall kann darin liegen, dass die am Eingangsanschluss 80 anliegende Eingangsspannung sich in unzulässiger Weise geändert hat. Unter Ansprechen auf einen derartigen Fehler erzeugt die Überwachungseinrichtung 40 ausgangsseitig eine logische Eins, welche den Ausgang des ODER-Gatters auf logisch Eins setzt. Das Ausgangssignal des ODER-Gatters 50 wird dem Flip-Flop 60 zugeführt, welches daraufhin das Schaltelement 70 in einen elektrisch sperrenden Zustand steuert. Auch in diesem Fall wird die Energieversorgung der beiden Logikeinheiten 101 und 102 des zweikanaligen Sicherheitssystems 100 sofort abgeschaltet.

Das Flip-Flop 60 sorgt dafür, dass bei Auftritt eines Fehlers das Schaltelement 70 dauerhaft geöffnet bleibt, so dass am Eingang der beiden DC-DC-Wandler 90 und 95 keine Eingangsspannung anliegt. Erst durch Anlegen eines gezielten Reset-Signals am Flip-Flop 60 wird das Schaltelement 70 wieder geschlossen, d. h. in einen elektrisch leitenden Zustand gesteuert.

Wie bereits erwähnt, kann die Überwachungseinrichtung 40 auch die Funktionsfähigkeit der übrigen Bauelemente der Schaltungsanordnung 10 überwachen oder aktiv testen und bei Erkennen eines Fehlers einen logischen High-Pegel erzeugen, der über das ODER-Gatter 50 und das Flip-Flop 60 das Schaltelement 70 in einen elektrisch sperrenden Zustand steuert.

An dieser Stelle sei noch ein alternatives Ausführungsbeispiel erwähnt, bei dem die beiden Logikeinrichtungen 101 und 102 gemeinsam entweder mit dem DC-DC-Wandler 90 oder dem DC-DC-Wandler 95 verbunden sein können.

Die beispielhaft beschriebene Schaltungsanordnung 10 ermöglicht somit die Speisung und Überwachung eines mehrkanaligen Sicherheitssystems über eine einzige Energieversorgungseinrichtung, die beide Logikeinrichtungen 101 und 102 speist. Wird ein Anstieg einer oder beider Logikspannungen erkannt, wird das zweikanalige Sicherheitssystem 100 sofort von der Energieversorgung getrennt. Insbesondere werden bei Auftritt eines Fehlers in einem oder beiden DC-DC-Wandler, der zu einer überhöhten Logikspannung führt, beide Logikeinheiten des zweikanaligen Sicherheitssystems 100 vom Eingangsanschluss 80 und somit von der Energieversorgungseinrichtung getrennt.

Dank der vorgeschlagenen Schaltungsanordnung 10 ist es nicht erforderlich, die Kanäle des zweikanaligen Sicherheitssystems 100 zu entkoppeln, was, wie erwähnt, eine gemeinsame Energieversorgung der beiden Logikeinrichtungen 101 und 102 ermöglicht.

## Patentansprüche

1. Sicherheitssystem zum mehrkanaligen Überwachen einer sicherheitsrelevanten Einrichtung , wobei das Sicherheitssystem aufweist:
wenigstens eine erste und zweite Logikeinrichtung (101, 102), die jeweils einem Kanal zugeordnet sind und gegen fehlerhafte Logikspannungen geschützt werden sollen,
- einen Eingangsanschluss (80) zum Zuführen einer Eingangsspannung,
- ein steuerbares Schaltelement (70) zum Zuführen oder Trennen der Eingangsspannung zu bzw. von der ersten und zweiten Logikeinrichtung (101, 102),
- einen ersten Gleichspannungswandler (90) mit integrierter Spannungsüberwachungseinrichtung, welche die vom ersten Gleichspannungswandler (90) abgegebene Ausgangsspannung überwacht, wobei der erste Gleichspannungswandler (90) als Ausgangsspannung eine erste Logikspannung für die erste Logikeinrichtung (101) bereitstellt,
- wenigstens einen zweiten Gleichspannungswandler (95) mit integrierter Spannungsüberwachungseinrichtung, welche die vom zweiten Gleichspannungswandler (95) abgegebene Ausgangsspannung überwacht, wobei der zweite Gleichspannungswandler (95) als Ausgangsspannung eine zweite Logikspannung für die zweite Logikeinrichtung (102) bereitstellt, und
- eine erste Überwachungseinrichtung (20) zur redundanten Überwachung der ersten und zweiten Logikspannungen , welche einen Komparator (30) aufweist, dem die erste und zweite Logikspannungen und eine Referenzspannung zugeführt werden, so dass die erste Überwachungseinrichtung (20) eine Halteeinrichtung (60) zum Öffnen und sicheren Halten des Schaltelements (70) im geöffneten Zustand ansteuert, sobald wenigstens eine der Logikspannungen einen vorbestimmten Schwellwert erreicht oder überschreitet.

2. Sicherheitssystem nach Anspruch 1,
wobei eine zweite Überwachungseinrichtung (40) parallel zur ersten Überwachungseinrichtung (20) vorgesehen ist, um unter Ansprechen auf ein vorbestimmtes Ereignis das Öffnen des Schaltelementes (70) zu veranlassen.

3. Sicherheitssystem nach Anspruch 2,
wobei die zweite Überwachungseinrichtung (40) die Spannung am Energieversorgungsanschluss (80), die zweite Logikspannung, die Funktionsfähigkeit der ersten Überwachungseinrichtung (20) und/oder die Funktionsfähigkeit des Schaltelementes (70) überwacht.

4. Sicherheitssystem nach Anspruch 3, wobei die erste und zweite Überwachungseinrichtungen (20; 40) über ein ODER-Gatter (50) mit der Halteeinrichtung (60) verbunden sind, um diese im Ereignisfall zum Öffnen des Schaltelementes (70) und Halten im geöffneten Zustand zu bringen.

5. Sicherheitssystem nach einem der Ansprüche 1 bis 4, wobei die Halteeinrichtung (60) ein Flip-Flop ist.

6. Sicherheitssystem nach einem der Ansprüche 2 bis 5, wobei
die erste und/oder zweite Überwachungseinrichtung (20, 40) jeweils dazu ausgebildet sind, die erste und zweite Logikeinrichtungen (101, 102) gegen Unterspannungen zu schützen.

## Claims

1. A safety system for multi-channel monitoring of a safety-related device (100), the safety system comprising the following features:
at least first and second logic devices (101, 102), wherein each of which is associated to a separate channel and to be protected against faulty logic voltages:
- an input terminal (80) for supplying an input voltage;
- a controllable switching element (70) for passing the input voltage to the first and second logic devices (101, 102) or blocking the input voltage from the first and second logic devices (101, 102);
- a first DC voltage converter (90) having an integrated voltage monitoring device, which monitors the output voltage from the DC voltage converter (90), wherein the first DC voltage converter (90) provides as an output voltage a first logic voltage to the first logic device (101);
- at least one second DC voltage converter (95) having an integrated voltage monitoring device, which monitors the output voltage from the voltage converter (95), wherein the at least one second DC voltage converter (95) provides as an output voltage a second logic voltage to the second logic device (102); and
- a first monitoring device (20) for redundantly monitoring the first and second logic voltages, wherein the first monitoring device (20) comprises a comparator (30) which is supplied with the first and second logic voltages and a reference voltage, so that the first monitoring device (20) drives a holding means (60) for opening and reliably holding the switching element (70) in the open state, if at least one of the first and second logic voltages reaches or exceeds a predetermined threshold voltage value.

2. The safety system according to claim 1, wherein a second monitoring device (40) is provided in parallel to the first monitoring device (20) to cause the switching element (70) to be opened in response to a predefined event.

3. The safety system according to claim 2, wherein the second monitoring device (40) monitors the voltage at the power supply terminal (80), the second logic voltage, the operability of the first monitoring device (20), and/or the operability of the switching element (70).

4. The safety system according to claim 3, wherein the first and second monitoring devices (20; 40) are connected to the holding means (60) via an OR gate (50) to cause the holding means (60) to open the switching element (70) and to hold it in the open state in case of an event.

5. The safety system according to anyone of the claims 1 to 4, wherein the holding means (60) is a flip-flop.

6. The safety system according to anyone of the claims 2 to 5, wherein each of the first and/or second monitoring device (20, 40) is adapted to protect the first and second logic devices (101, 102) against undervoltage.

## Revendications

1. Système de sécurité pour la surveillance à plusieurs canaux d'un dispositif important pour la sécurité, ledit système de sécurité comprenant :
au moins un premier et un deuxième dispositifs logiques (101, 102) affectés chacun à un canal et devant être protégés contre des tensions logiques défectueuses,
- une connexion d'entrée (80) pour l'amenée d'une tension d'entrée,
- un élément de commutation (70) pouvant être commandé pour la conduction de la tension d'entrée vers les premier et deuxième dispositifs logiques (101, 102) ou la coupure de celle-ci,
- un premier convertisseur continu-continu (90) à dispositif de surveillance de tension intégré, lequel surveille la tension de sortie fournie par le premier convertisseur continu-continu (90), ledit premier convertisseur continu-continu (90) délivrant comme tension de sortie une première tension logique pour le premier dispositif logique (101),
- au moins un deuxième convertisseur continu-continu (95) à dispositif de surveillance de tension intégré, lequel surveille la tension de sortie fournie par le deuxième convertisseur continu-continu (95), ledit deuxième convertisseur continu-continu (95) délivrant comme tension une deuxième tension logique pour un deuxième dispositif logique (102), et
- un premier dispositif de surveillance (20) pour la surveillance redondante de la première et de la deuxième tensions logiques, lequel présente un comparateur (30) recevant la première et la deuxième tensions logiques ainsi qu'une tension de référence, de manière que ledit premier dispositif de surveillance (20) commande un dispositif de maintien (60) pour l'ouverture et le maintien sûr de l'élément de commutation (70) en état d'ouverture, dès qu'au moins une des tensions logiques atteint ou dépasse une valeur seuil prédéfinie.

2. Système de sécurité selon la revendication 1, où un deuxième dispositif de surveillance (40) est prévu parallèlement au premier dispositif de surveillance (20), pour déclencher l'ouverture de l'élément de commutation (70) en réaction à un événement prédéfini.

3. Système de sécurité selon la revendication 2, où le deuxième dispositif de surveillance (40) surveille la tension sur la connexion d'alimentation en énergie (80), la deuxième tension logique, l'aptitude au fonctionnement du premier dispositif de surveillance (20) et/ou l'aptitude au fonctionnement de l'élément de commutation (70).

4. Système de sécurité selon la revendication 3, où les premier et deuxième dispositifs de surveillance (20 ; 40) sont reliés au dispositif de maintien (60) par une porte OU (50), pour amener celui-ci à l'ouverture et au maintien en état d'ouverture de l'élément de commutation (70) en cas d'incident.

5. Système de sécurité selon l'une des revendications 1 à 4, où le dispositif de maintien (60) est une bascule.

6. Système de sécurité selon l'une des revendications 2 à 5, où les premier et/ou deuxième dispositifs de surveillance (20, 40) sont prévus pour protéger respectivement les premier et deuxième dispositifs logiques (101, 102) contre des sous-tensions.
